# EUROPÄISCHE PATENTSCHRIFT

(11) **EP 0 625 463 B1**
(45) Veröffentlichungstag und Bekanntmachung des Hinweises auf die Patenterteilung: **21.08.1996**
(21) Anmeldenummer: 94107723.2
(22) Anmeldetag: 18.05.1994
(51) Int. Cl.: B64D 13/04, G05D 16/20

(54) **Kabinendruckregelanlage für Flugzeuge**
Cabin pressurization regulator for an aircraft
Régulateur de pression de la cabine d'un avion

(30) Priorität: 19.05.1993 DE 4316886
(43) Veröffentlichungstag der Anmeldung: 23.11.1994
(73) Patentinhaber: NORD-MICRO, ELEKTRONIK FEINMECHANIK AG, D-60388 Frankfurt (DE)
(72) Erfinder: Bloch, Alexander, D-35516 Münzenberg (DE); Ettl, Hanns-Ulrich, D-63477 Maintal (DE); Kuhn, Peter, D-63456 Hanau (DE)
(74) Vertreter: Preissner, Nicolaus, Dipl.-Ing.

(56) Entgegenhaltungen:
- US-A- 3 171 070
- US-A- 3 375 771
- US-A- 3 728 955

## Beschreibung

Die Erfindung bezieht sich auf eine Kabinendruckregelanlage für Flugzeuge mit einem Regler für einen Soll-Ist-Vergleich des Kabinendruckes und einer davon abhängigen Ansteuerung des Luft-Auslaßventils.

Bei derartigen Kabinendruckregelungen ist es üblich, über einen Soll-Ist-Vergleich des in der Kabine herrschenden Druckes und des von der Flughöhe des Flugzeuges abhängigen Kabinendrucks als Sollwert ein Luftauslaßventil - meist am Heck des Flugzeuges - so zu steuern, daß durch die über das Ventil abströmende Kabinenluft eine vorgegebene Druckabsenkung erreicht wird.

Bei den bisher üblichen Kabinendruckregelanlagen wurde von dem Regler nach dem Soll-Ist-Vergleich ein bestimmtes Signal an den nachgeschalteten elektrischen Antrieb für das Ventil gegeben, wobei dann vom Ventil eine Stellungsrückmeldung erfolgte, die jeweils mit dem vorgegebenen Verstellwert verglichen wurde und ggf. eine Nachregelung erfolgte.

Eine derartige Regelung mit einer ständigen Rückmeldung der Ventilposition beinhaltet jedoch einen erheblichen Aufwand, der darüberhinaus wegen der Vielzahl der einzelnen Komponenten auch in erhöhtem Maße störanfällig ist.

Der vorliegenden Erfindung liegt demgegenüber die Aufgabe zugrunde, eine Kabinendruckregelung zu schaffen, die sehr viel einfacher aufgebaut ist und mit weniger Komponenten auskommt, jedoch dennoch in optimaler Weise den Druck in der Kabine regeln kann.

Zur Lösung dieser Aufgabe ist erfindungsgemäß vorgesehen, daß das Ventil einen geschwindigkeitsgeregelten Antrieb aufweist und daß ohne Positionsrückmeldung vom Ventil eine Rückmeldung zum Regler allein über den sich neu einstellenden Kabinen-Ist-Druck erfolgt.

Das bedeutet, daß vom Hauptregler der Antrieb des Ventils allein geschwindigkeitsgeregelt angesteuert wird und eine Rückmeldung allein über den sich ändernden Kabinendruck erfolgt. Damit ist auf sehr viel einfachere Weise und mit weniger Komponenten eine sehr sichere Regelung des Kabinendruckes ermöglicht.

Zweckmäßig ist es dabei, wenn die Steuersignale vom Regler zum Antrieb über einen digitalen Datenbus übertragbar sind. Dieser digitale Datenbus ist zweckmäßigerweise nach dem Arinc-429-Standard ausgebildet.

Darüberhinaus ist es zweckmäßig, wenn die Stromversorgung des Antriebs direkt von der Reglerlogik geschaltet ist und nicht mehr, wie bisher üblich, direkt am Antrieb.

Zur Einsparung von Leitungen und zur Vermeidung einer gegenseitigen Beeinflussung ist es ferner zweckmäßig, wenn die Informationen über den aktuellen Zustand des Antriebes, insbesondere Fehlermeldungen, Ergebnisse von Selbsttests und Status der Endschalter, zusammengefaßt über einen Datenbus erfolgen.

Aus Sicherheitsgründen ist es ferner zweckmäßig, wenn zusätzlich zum geregelten Antrieb ein von Hand anzusteuernder Antriebsmotor für das Ventil vorgesehen ist.

Zur zusätzlichen Absicherung und Optimierung der Anlage ist es ferner von Vorteil, wenn zwei Regler mit je einen Regelkanal und je einem Antrieb für das gemeinsame Ventil vorgesehen sind, die abhängig von äußeren Parametern wechselseitig die Ansteuerung und Regelung des Antriebs übernehmen.

Dabei ist es jedoch auch möglich, daß jeder Regler in Wirkverbindung mit jeweils zwei gesonderten Ventilen steht, um damit einen höheren Luftdurchsatz bzw. Luftaustausch zu ermöglichen.

Anhand einer schematischen Zeichnung sind Aufbau und Funktionsweise von Ausführungsbeispielen nach der Erfindung näher erläutert. Dabei zeigen:
- Fig. 1: das Grundschaltbild einer solchen Kabinendruckregelung,
- Fig. 2: das Schaltbild in Einzelheiten für die Antriebssteuerung und
- Fig. 3: eine erweiterte Schaltung mit zwei Reglern und zwei Ventilen.

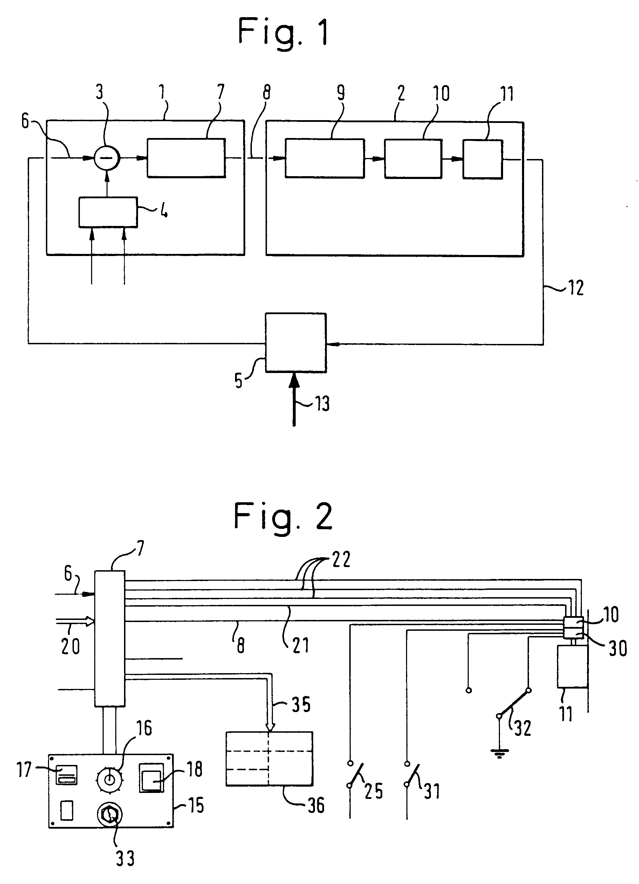

Wie man aus dem Prinzipschaltbild nach Fig. 1 ersieht, besteht die Kabinendruckregelanlage im wesentlichen aus dem eigentlichen Regler 1 sowie dem elektrischen Antrieb 2. Im eigentlichen Reglerteil 1 erfolgt in einem Differenzglied 3 ein Soll-Ist-Wertvergleich zwischen dem vom Sollwertgeber 4 vorgegebenen Kabinendrucksollwert und einem von der Kabine 5 einzuspeisenden Istwert 6, deren Differenz der eigentlichen Regellogik 7 zugeführt wird.

Über einen noch zu erläuternden digitalen Datenbus 8 werden die Steuersignale an die Ventil-Antriebseinheit 2 gegeben, die zunächst einen Geschwindigkeitsregler 9 aufweist, von dem aus dann die Steuersignale an den Motor 10 und das Getriebe gegeben werden, womit schließlich das Ventil 11 mehr oder weniger stark geöffnet oder geschlossen wird. Der Antrieb 10 ist dabei allein geschwindigkeitsgeregelt, d.h. der Regler 7 gibt allein Signale bezüglich der Geschwindigkeit, mit der der Antrieb das Ventil öffnet oder schließt.

Eine Rückmeldung der Funktion bzw. der Wirkung des Luft-Auslaßventiles 11 erfolgt dann allein über den sich geändert habenden Druck 6 in der Kabine 5, der darüberhinaus aber auch noch abhängig ist von zuströmender Frischluft 13.

Das bedeutet also, daß das Luft-Auslaßventil 11 allein geschwindigkeitsgeregelt angesteuert wird und eine einzige Rückmeldung zum Regler 7 über den sich ändernden Istwert des Kabinendruckes erfolgt.

In Fig. 2 ist ein spezielles Lösungsprinzip für eine Kabinendruckregelanlage angegeben. Hierbei ist zunächst an den eigentlichen Regler 7 ein Bedienpaneel 15 angeschlossen, das ein entsprechendes Einstellgerät 16 für die jeweilige Höhenlage der Landebahn aufweist, da danach die Druckverhältnisse eingestellt werden müssen sowie einen Fehleranzeiger 17 mit einer eventuellen manuellen Umschaltung und einen Schalter 18 zur Öffnung des Auslaßventils 11 und eines Sicherheitsventils für Notfälle.

In den Regler 7 werden in gleicher Weise wie im Prinzipschaltbild nach Fig. 1 der Kabinendruck 6 und weitere Werte 20, beispielsweise für den Umgebungsdruck oder gesonderte Statusinformationen, eingegeben.

Vom Regler 7 werden dann die entsprechenden Steuersignale über den digitalen Datenbus 8, der nach dem Arinc-429-Standard ausgebildet ist, an den Antrieb 10 gegeben. Gleichzeitig wird die Stromversorgung über die Leitung 21 direkt vom Regler 7 zum Antrieb geschaltet.

Als Statusinformation vom Antrieb 10 zum Regler 7 sind nach dem dargestellten Ausführungsbeispiel Rückleitungen vorgesehen, wobei über die Leitungen 22 die Ergebnisse von Selbsttests und der Status der Endschalter und des Druckschalters übermittelt werden. Es ist aber auch möglich und zweckmäßig, diese Leitungen 22 zusammenzufassen und die Rückmeldungen über einen Datenbus erfolgen zu lassen.

Zusätzlich ist in dem Schaltbild noch ein Schalter 25 dargestellt, mit dem ab einer bestimmten Höhe das Ventil 11 ganz geschlossen wird. Darüberhinaus ist an den geschwindigkeitsgeregelten Antrieb 10 noch ein von Hand anzusteuernder Antriebsmotor 30 vorgesehen, der über den Schalter 17 bzw. 31 betätigt und ggf. an eine Notstromquelle anschließbar ist. Der Schalter 32 für den Antrieb 30 steht in Wirkverbindung mit dem Schalter 33 zum manuellen Öffnen und Schließen des Ventils 11.

Darüberhinaus wird vom Regler 7 über die Leitung 35 noch ein Display 36 beaufschlagt, in dem die entsprechenden Werte über die Kabinenhöhe, die Landebahnhöhe, den Kabinendruck und verschiedene andere Anzeigen dargestellt werden.

Selbstverständlich ist es aber auch möglich, die Kabinendruckregelanlage in der Weise redundant auszulegen, daß zwei Regler vorgesehen sind, die mit je einem Regelkanal und je einem Antrieb auf das gemeinsame Ventil einwirken, wobei die beiden Regler abhängig von äußeren Parametern wechselseitig die Ansteuerung und Regelung des Antriebs übernehmen. Eine solche Schaltung ist jedoch in der Zeichnung im einzelnen nicht dargestellt.

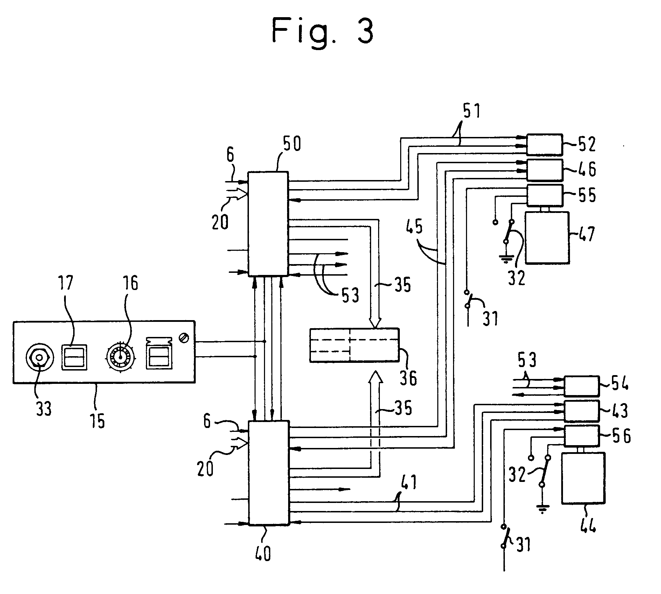

Demgegenüber zeigt aber Fig. 3 eine Schaltung, bei der bei auch redundanter Auslegung zwei Regler auf jeweils zwei verschiedene Antriebe mit zwei gesonderten Ventilen einwirken.

Wie man dazu aus der Zeichnung erkennt, wirkt der Regler 40 über die Steuerleitungen 41 bzw. einen entsprechenden Datenbus auf den Antrieb 43 des Ventils 44 ein. In gleicher Weise führen vom Regler 40 Steuerleitungen 45 zum Antrieb 46 des zweiten Ventils 47.

Der parallele Regler 50 wirkt über die Steuerleitungen 51 in Form eines Datenbusses auf den Antrieb 52 ebenfalls für das Ventil 47 ein, während über Steuerleitungen 53 der Antrieb 54 für das Ventil 44 verstellt wird.

In gleicher Weise weist hier jedes der Ventile 44 und 47 auch einen handbetätigbaren Antrieb 55 bzw. 56 auf. Analog zu dem Ausführungsbeispiel nach Fig. 2 ist auch hier ein Bedienpaneel 15 vorgesehen, das in Wirkverbindung mit den beiden Reglern 40 und 50 steht sowie das in gleicher Weise an beide Regler angeschlossene Display 36. Dabei übernehmen auch hier die beiden Reglern 40 und 50 abhängig von äußeren Parametern wechselseitig die Ansteuerung und Regelung der Antriebe 43 und 46 bzw. 52 und 54. Eine solche Kabinendruckregelungsanlage ist insbesondere für größere Flugzeuge zweckmäßig, bei denen jeweils im vorderen und im hinteren Teil des Flugzeuges ein solches Luft-Auslaßventil 44 bzw. 47 vorgesehen sind.

Insgesamt ergibt sich also eine Kabinendruckregelanlage, die mit vermindertem Aufwand abhängig von vorgegebenen Regelparametern eine sichere und ggf. redundante Regelung des Kabinendrucks abhängig von der Flughöhe des Flugzeugs sicherstellt.

## Patentansprüche

1. Kabinendruckregelanlage für Flugzeuge mit einem Regler (7, 40, 50) für einen Soll-Ist-Vergleich des Kabinendruckes und einer davon abhängigen Ansteuerung eines Luft-Auslaßventils (11, 44, 47), dadurch gekennzeichnet, daß das Ventil (11; 44, 47) einen geschwindigkeitsgeregelten Antrieb (10; 46, 52; 43, 54) aufweist und daß ohne Positionsrückmeldung vom Ventil (11; 44, 47) eine Rückmeldung zum Regler (7; 40, 50) allein über den sich neu einstellenden Kabinen-Ist-Druck erfolgt.

2. Kabinendruckregelanlage nach Anspruch 1, dadurch gekennzeichnet, daß die Steuersignale vom Regler (7; 40, 50) zum Antrieb (10; 46, 52; 43, 54) über einen digitalen Datenbus (8; 41, 45; 51, 53) übertragbar sind.

3. Kabinendruckregelanlage nach Anspruch 2, dadurch gekennzeichnet, daß der digitale Datenbus (8; 41, 45; 51, 53) nach dem Arinc-429-Standard ausgebildet ist.

4. Kabinendruckregelanlage nach Anspruch 1, dadurch gekennzeichnet, daß die Stromversorgung (21) des Antriebs (11) direkt von der Regellogik (7) geschaltet ist.

5. Kabinendruckregelanlage nach Anspruch 1, dadurch gekennzeichnet, daß Informationen über den aktuellen Zustand des Antriebs (10), insbesondere Fehlermeldungen, Ergebnisse von Selbsttests und Endschalter Status, zusammengefaßt über einen Datenbus (22, 23, 24) erfolgen.

6. Kabinendruckregelanlage nach Anspruch 1, dadurch gekennzeichnet, daß zusätzlich zum geregelten Antrieb (10; 46, 52; 43, 54) ein von Hand anzusteuernder Antriebsmotor (30; 55; 56) vorgesehen ist.

7. Kabinendruckregelanlage nach Anspruch 1 und 2, dadurch gekennzeichnet, daß zwei Regler (40, 50) mit je einem Regelkanal und je einem Antrieb für das gemeinsame Ventil vorgesehen sind, die abhängig von äußeren Parametern wechselseitig die Ansteuerung und Regelung des Antriebs übernehmen.

8. Kabinendruckregelanlage nach Anspruch 7, dadurch gekennzeichnet, daß jeder Regler (40, 50) in Wirkverbindung mit jeweils zwei gesonderten Ventilen (44, 47) steht.

## Claims

1. Cabin pressure regulator for aircraft with a controller (7, 40, 50) for desired/actual comparison of the cabin pressure and an activator, dependent thereon, for an air outlet valve (11, 44, 47), characterized in that the valve (11; 44, 47) has a speed-controlled drive (10; 46, 52; 43, 54) and in that, without position feedback from the valve (11; 44, 47), feedback to the controller (7; 40, 50) is effected merely by the newly adjusted actual cabin pressure.

2. Cabin pressure regulator according to Claim 1, characterized in that the control signals from the controller (7; 40, 50) can be transmitted to the drive (10; 46, 52; 43, 54) via a digital data bus (8; 41, 45; 51, 53).

3. Cabin pressure regulator according to Claim 2, characterized in that the digital data bus (8; 41, 45; 51, 53) is designed according to the Arinc-429 standard.

4. Cabin pressure regulator according to Claim 1, characterized in that the power supply (21) to the drive (11) is switched directly by the control logic element (7).

5. Cabin pressure regulator according to Claim 1, characterized in that information about the current status of the drive (10), in particular fault messages, results of self tests and limit switch status, is combined via a data bus (22, 23, 24).

6. Cabin pressure regulator according to Claim 1, characterized in that a manually activated driving motor (30; 55; 56) is provided in addition to the controlled drive (10; 46, 52; 43, 54).

7. Cabin pressure regulator according to Claims 1 and 2, characterized in that two controllers (40, 50) with a respective control channel and a respective drive are provided for the common valve and alternately activate and control the drive as a function of external parameters.

8. Cabin pressure regulator according to Claim 7, characterized in that each controller (40, 50) cooperates with two respective separate valves (44, 47).

## Revendications

1. Installation de régulation de pression pour la cabine d'un avion, comportant un régulateur (7, 40, 50) destiné à une comparaison entre une valeur réelle et une valeur de consigne de la pression de la cabine, et pour un pilotage en fonction de cette comparaison d'une soupape d'échappement d'air (11, 44, 47), caractérisée en ce que la soupape (11; 44, 47) comporte un entraînement (10 ; 46, 52 ; 43, 44) régulé en vitesse, et en ce que, sans information en retour concernant la position de la soupape (11, 44, 47), une information en retour vers le régulateur (7 ; 40, 50) a lieu uniquement via la pression réelle de la cabine qui s'établit nouvellement.

2. Installation de régulation de pression pour la cabine d'un avion, selon la revendication 1, caractérisée en ce que les signaux de commande peuvent être transmis depuis le régulateur (7 ; 40, 50) jusqu'à l'entraînement (10 ; 46, 52 ; 43, 54) via un bus de données numérique (8 ; 41, 45 ; 51, 53).

3. Installation de régulation de pression pour la cabine d'un avion, selon la revendication 2, caractérisée en ce que le bus de données numérique (8 ; 41, 45 ; 51, 53) est réalisé selon la norme Arinc-429.

4. Installation de régulation de pression pour la cabine d'un avion, selon la revendication 1, caractérisée en ce que l'alimentation électrique (21) de l'entraînement (11) est branchée directement depuis le circuit logique de régulation (7).

5. Installation de régulation de pression pour la cabine d'un avion, selon la revendication 1, caractérisée en ce que les informations concernant l'état actuel de l'entraînement (10), en particulier les messages d'erreur, les résultats des auto-tests, et l'état des commutateurs de fin de course, se produisent de façon regroupée via un bus de données (22, 23, 24).

6. Installation de régulation de pression pour la cabine d'un avion, selon la revendication 1, caractérisée en ce qu'il est prévu, en plus de l'entraînement régulé (10 ; 46, 52 ; 43, 54) un moteur d'entraînement (30 ; 55 ; 56) piloté à la main.

7. Installation de régulation de pression pour la cabine d'un avion, selon l'une ou l'autre des revendications 1 et 2, caractérisée en ce qu'il est prévu deux régulateurs (40, 50) avec chacun un canal de régulation et chacun un entraînement pour la soupape commune, qui reprennent en alternance le pilotage et la régulation de l'entraînement, en fonction de paramètres extérieurs.

8. Installation de régulation de pression pour la cabine d'un avion, selon la revendication 7, caractérisée en ce que chaque régulateur (40, 50) est en liaison active avec deux soupapes spéciales respectives (44, 47).
